# EUROPEAN PATENT SPECIFICATION

(11) **EP 3 166 191 B1**
(45) Date of publication and mention of the grant of the patent: **01.01.2025**
(21) Application number: 15193039.3
(22) Date of filing: 04.11.2015
(51) Int. Cl.: H02G 3/32, H02G 3/04

(54) **CLAMP, BASE SUPPORT AND CLAMPING ASSEMBLY**
KLEMME, SOCKELSTÜTZE UND KLEMMANORDNUNG
PINCE, SUPPORT DE BASE ET ENSEMBLE DE SERRAGE

(43) Date of publication of application: 10.05.2017
(73) Proprietor: Tyco Electronics UK Ltd., Swindon, Wiltshire SN3 5HH (GB)
(72) Inventor: MacNaughton, Roy, Swindon, Wiltshire SN1 4LT (GB); Bird, Jeremy, Gloucester, GL4 4QR (GB)
(74) Representative: Grünecker Patent- und Rechtsanwälte PartG mbB

(56) References cited:
- EP-A1- 2 562 432
- EP-A1- 2 618 034
- EP-A1- 2 777 991
- DE-U1- 202005 015 875
- GB-A- 2 486 682
- US-A1- 2014 259 566

## Description

The invention relates to a clamp, a base support and a clamping assembly.

Such clamps, base supports and clamping assemblies, for instance used for holding and/or fixing of at least one of wire bundles, at least one cable, at least one pipe and similar longitudinal structures, are known from the prior art. US patent application US 2013/0270400 A1 discloses, for instance, a cable breakout support comprising a clamp for clamping to a trunking, and a clip for clipping to a cable breakout of a cable bundle supported in the trunking.

Mounting of such attachment devices, usually a common barbed interface with a secondary locking pin is used. They are normally installed by pushing the attachment device into a base mount until a primary locking feature, for instance comprising four hooks, engages with a corresponding counter locking features. Subsequently, a secondary action is necessary, during which the end-user pushes the secondary locking pin into position from the rear of the assembly for completing the installation of the attachment device. This secondary action ensures a secure primary and secondary lock.

Those solutions from the prior art yield some disadvantages. Firstly, the locking pin or securing element is a separate member which may get lost during installation of the attachment devices. Secondly, the secondary action is necessary to install the securing element to the attachment device, this step represents an additional step to be performed by the end-user. If this secondary action is omitted or forgotten, for instance if the process of installation is interrupted, prior art attachment devices are only locked by the primary lock without having said primary lock and the secondary lock secured by the securing element. Only by means of further inspection of the attachment device, may the end-user determine whether the primary and secondary lock are secured.

Additionally, certain environments may prevent installation of prior art attachment devices as handling space, required for insertion of the securing element, may be limited in such a way that inserting the securing member from the rear of the assembly is very difficult or not possible at all.

Further clamping assemblies of the art are disclosed in document GB 2 486 682 A that discloses a cable breakout support, comprising a clamp for clamping to a trunking, a clip socket and a clip for clipping to a cable. The clip is mounted along a first direction into the clip socket of the clamp. Subsequently, a clip lock, i.e. a securing pin, is inserted along a second direction into the clip socket of the clamp, the second direction being opposite the first direction.

DE 20 2005 015875 U1 discloses a holder assembly for calbles and the like with determinable rotational position. A base member receives a spring arm section of a carrier member, which spring arm section engages a circumferential notch of the base member. Subsequently a securing pin is inserted into the carrier member and the base member, which securing pin prevents disengagement of the spring arms with the notch.

EP 2 777 991 A1 discloses a clamp holder, wherein the clamp is received in a base receptacle. The clamp comprises a socket section with a circumferential protrusion, which protrusion engages in a frictional fit with the inside of the base receptacle.

GB 2 486 682 A discloses a cable breakout support 100 comprises a clamp 200 for clamping to a trunking 110 and a clip 210 for clipping to a cable 130, 131, 132 breaking out of a cable bundle 120, 122 supported in the trunking.

The invention solves the problems by providing a clamp according to claim 1. This clamp comprises a clamping section which is adapted to clampingly receive at least one longitudinal structure, such as a wire bundle, at least one cable or at least one pipe, further comprising a socket section which is adapted to be mounted to a base support.The clamp further comprising latching arms and the socket section comprising at least one securing element which is movable from a pre-lock position to a securing position and comprises indentations and a blocking section; and locking arms. The securing element is mounted to an end of the socket section which end is located opposite to the clamping section in the pre-lock position prior to and during the mounting of the clamp to the base support, and wherein the securing element is latched to the socket section both in the pre-lock position and in the securing position, wherein the latching arms are adapted to hold the securing element in the pre-lock position by a latching of the latching arms to the indentations of the securing element, and wherein the securing element is adapted to block a resilient movement of the locking arms by inserting the blocking section of the securing element in between the locking arms.

The inventive base support according to claim 2 solves the disadvantages above by comprising a support section for mounting the base support to a holding structure such as a wall, a machine or similar fundamental structures, a socket receptacle for receiving a socket section of a clamp, the base support further comprising a trigger member, which extends into the socket receptacle receptacle wherein the trigger member comprises a beam extending into the receptacle and is supported by at least one spring member, wherein the beam is arranged as a centered straight section passing the socket receptacle and oriented perpendicular to a central axis and a counter locking element, which is embodied as an at least partially circumferential edge for engagement with the socket section of the clamp.

The inventive clamping assembly according to claim 9 solves the disadvantages above, by comprising a clamp according to claim 1, and a base support according to claim 2., wherein the socket receptacle extends substantially along an insertion direction, and wherein the socket receptacle is adapted to receive the socket section of the clamp and to engage with the locking arms, wherein in the securing position, the at least one securing element is adapted to secure the engagement of the at least one of the locking arms and the socket receptacle, and wherein the securing element is latched to the socket section both in the pre-lock position and in the securing position, wherein the locking arms are adapted to block the at least one securing element from being moved from the pre-lock to the securing position prior to completion of engagement of the locking arms and the base support wherein the trigger member is resiliently deflected by the securing element by exerting a pushing force onto the trigger member, and wherein the trigger member automatically moves the at least one securing element from the pre-lock position to the securing position when the at least one locking element and the base support are engaged.

These solutions provide a facilitated installation of an attachment device as the secondary action of installing the securing element is performed automatically when the primary lock is engaged. Therefore, one aspect of the inventive clamp, base support and clamping assembly is to provide an easier and faster installation procedure.

Another aspect of this disclosure is to provide a securing element which is not easily lost and which may not be omitted or forgotten during mounting of the attachment device.

Furthermore, another aspect of the invention is to provide a clamp, a base support and a clamping assembly applicable under spatial conditions which do not allow the end-user to perform the secondary action of inserting the securing element into the attachment device.

In the following, further embodiments are given that are advantageous on their own. The solutions represented by this embodiment of the invention can be combined as desired.

Locating the securing element in the end of the socket section, which is located opposite to the clamping section, is advantageous as said socket section is the first part inserted into a base support. Therefore, only a moderate insertion distance of the socket section into the base support is necessary, allowing for a compact design of the clamp.

The securing element is latched to the clamp. By mounting the securing element by such a positive locking, the securing element remains replaceable/exchangeable, without the danger of unintentionally losing the securing element. The securing element may be snapped or latched to the clamp, whereas the securing element may be regarded as part of the clamp and also during a fast and/or hasty mounting of the clamp within a limited time, the securing element may not be forgotten during installation. The securing element is latched to the socket section of the clamp.

The securing element is latched in both the pre-lock position and in the securing position. The securing element may also be snapped to the clamp, in particular to the socket section of the clamp. Such determined/fixed positions of the positive lock between the clamp and the securing element may define the pre-lock position and the securing position, and furthermore keeping the securing element in place, once one of said two positions is reached. The two determined positions of the securing element therefore represent another securing feature, as the securing element may not be easily moved out of the pre-lock position or the securing position, for instance, by shaking loose.

In a first advantageous embodiment of the inventive base support, the trigger member comprises a spring member, which spring member is adapted to be loaded if the trigger member is moved away from an insertion opening of the socket receptacle.

The spring member may be a separate spring member attached to the base support and extending into the socket receptacle. The resilient movement of the trigger member may be a linear movement, a tilting movement or a rotational movement.

The trigger member may be elastically deflectable away from the insertion opening. Such an elastic beam has the advantage that no conventional spring, for instance a circular spring, is necessary to provide the resilient movement away from the insertion opening. The elastic beam, however, may be additionally supported by a conventional spring.

The elastic beam may comprise solely one single beam or may comprise a plurality of sub-beams which may, at least in sections, provide the resilient movement. The beam may be resilient over its whole length or may be only resilient in the section extending into or being located adjacent to the socket receptacle.

It is advantageous if in another embodiment of the inventive base support, the socket receptacle is cylindrical and extends substantially along an insertion direction and a beam is comprised, which crosses the socket receptacle substantially perpendicular to the insertion direction, wherein the beam is fixed at one or both of its ends to the base support.

A structure having a length larger than its height and larger than its width is to be understood as beam.

Such an embodied beam allows to be deflected by means of a force exerted substantially perpendicular to the beam. Thus, the force may directly deflect the beam without contributions of the force acting along the beam.

The beam may comprise a polymer and/or a glass insert. With such a glass insert the beam may be embodied with a thinner connection part between the beam and the base support. Basically the material of the beam defines its form. The resilience of the beam may be achieved by means of the beam material, by means of the beam geometry or by a combination of both.

The beam may comprise a freestanding end, which is not connected to the base support, whereas the end distal to the free standing end is attached to the base support. The attachment to the base support may be realized by an attachment member.

Both ends of the beam may be attached to the base support, whereas also in this embodiment the ends of the beam may be attached to the base support using appropriate attachment members.

A cylindrical socket receptacle is easily produced, for instance by injection molding, and may provide a rotational symmetry allowing for the insertion of a socket of a clamp in different rotational orientations of the clamp. A pre-alignment of the clamp and its socket section by the end-user is therefore not necessary.

A cylindrical socket receptacle is furthermore advantageous, as the corresponding locking member of the clamp's socket section, for instance comprising four hooks, may also be arranged with rotational symmetry and may be easily produced as well.

The socket receptacle may comprise different receptacle sections, in which different internal diameters may be present. It is conceivable that an entrance section of the socket receptacle yields an internal diameter larger than the outer diameter of the clamp's socket section, allowing for an easy insertion of the socket section into the socket receptacle.

Furthermore, the entrance section of the socket receptacle may comprise corresponding indentations and protrusions for determining the rotational position of the clamp with respect to the base support. Adjacent to the entrance section of the socket receptacle, a locking barrel section may be located, yielding an internal diameter which may be essentially the same or approximately up to a 5 %, this value being exemplary and not limiting, smaller diameter as the outer diameter of the clamp's socket section, in which no hooks are comprised. The outer diameter of the clamp's socket section, in which the hooks are comprised, may be larger than the internal diameter of the locking barrel section.

In such an embodiment the rotationally, nearly symmetrically embodied locking members of the clamp's socket may be deflected by abutment of the locking members to the inside wall of the locking barrel section of the base mount.

Furthermore, the socket receptacle may comprise a third section, in which the trigger member is preferably located. However, the trigger member may also be located in the locking barrel section.

The transition from the locking barrel section to a third section of the base support may comprise a counter locking element which is complementary to the locking member or locking members of the clamp. The counter locking element may be embodied as a circumferential edge, behind which the locking element or elements of the clamp, more precisely in an exemplary and non-limiting embodiment, the barbed hooks may be engaged. The cross-section of all three sections of the socket receptacle may be similar, just differing in their internal diameter, or different to each other.

In another advantageous embodiment of the inventive base support, the trigger member is symmetrical to the insertion direction and/or is substantially S-shaped. A symmetrically embodied trigger member has the clear advantage of an even balanced force exerted to the securing member.

The deflection of the trigger member depends on the used material as well as on the geometry of the trigger member. If the cross-section of the trigger member is fixed, deflecting a trigger member is possible with a predetermined deflection distance per trigger member length unit. Changing the geometry, that is the cross-section of the trigger member allows for variation of the deflection distance per trigger member length unit, whereas this change may be introduced at the expense of the resilience force and/or the damage resistance of the trigger member. Therefore, while remaining the resilience force and/or the damage resistance of the trigger member, the deflection length may be increased by means of an increased trigger member length.

In order to avoid dimensions that are too large for the base support, such a trigger member may be embodied in a shaped form partially exceeding or winding around the base support.

It is conceivable, that a larger fraction of the trigger member is located outside the socket receptacle, whereas not only an S-shape is conceivable, but also exemplarily and not limiting, a vortex or spiral shape.

It is advantageous if one embodiment of the base support comprises a trigger member which is integrally molded with the base support. That is, the trigger member is attached monolithically to the base support. Such a trigger member facilitates the production of the base support, as no additional steps for producing and/or attaching the trigger member to the base support are necessary.

Furthermore, such a trigger member is undetachable and may not get lost during assembly. An integrally molded trigger member reduces costs and production time for a base support and is thus economic. Furthermore, installation of the trigger member to the base support in an additional assembly step is not necessary.

The support section of the base support may be adapted according to the field of application. A base support adapted to be mounted to trunks may comprise trunk fittings for clamping to the edges of the trunk, a base support adapted to be mounted to a wall may comprise appropriate means for attaching the base support to said wall. Attachment to a wall may, for instance, be performed by a hook and an eye or by a latching member adapted to be latched into a complementary recess located at respectively in the wall.

Attaching the base support to a machine may, for example, be performed by a threaded bar for screwing the base support to the machine or by an internal screw thread for receiving a screw.

It is furthermore possible, that the support section of the base support is embodied as a clamp for fixing the base support to an edge or to a pipe or a similar longitudinal structure which is fixed, for instance, at a wall or between the ceiling and the floor. Different other embodiments of the support section are conceivable, as for instance a flat, ribbon-like support section adapted for being clamped by a fixed clamping structure.

In another advantageous embodiment of the inventive base support, the support section is plate-like and has a mounting plane. Such a plate-like base support allows to securely attach the base support and the clamp to be inserted and held in the socket receptacle to a wall to a machine or to a similar fundamental structure. Furthermore a plate-like support section allows for fixing the base support at at least two spots, therefore preventing unnecessarily high shear forces exerted on one single fixation point of the support section.

Such a plate-like support may furthermore be mounted to a holding structure by means of gluing with conventional liquid glue and/or double-sided scotch tape. Those means are just exemplary and not limiting the invention.

The plate-like support may comprise one or more through holes adapted to receive a fixation member, as for instance a screw or a bolt.

The plate-like support may be adapted to correspond to a mounting plane of, for instance the wall, therefore transferring a reference orientation of the structure the base support is attached to, to a part of the base support.

In another advantageous embodiment of the inventive base support the socket receptacle is tilted such that its insertion direction is oriented at an angle of at least substantially 0° or 30° or 45° or 60° or 90° to the mounting plane. A predetermined angle of the socket receptacle may be useful if certain bending angles of cables have to be respected, that is the cable or the like may not be bent more than a limiting angle. Such a limited bending angle need for instance to be respected when working with optical fibers.

The insertion direction of the socket receptacle may be tilted at basically any angle between 0° and 90° to the mounting plane. Furthermore it is conceivable, that this tilting angle is not fixed to one value, but is variable before/during mounting of the base support.

It is even possible that during operation of the base support, the angle between the insertion direction and the mounting plane is variable by means of a rotational force exerted on to the socket receptacle by the clampingly received longitudinal structure as for instance wire bundles. Such a support may represent a predetermined pivot point for the longitudinal structure held.

The securing element of the inventive clamping assembly may be comprised in the clamp but may also be comprised in the base support. The trigger member may be comprised in the same element that is in the clamp or in the base support, as the securing element but may also be comprised in the complementary element.

The resilient movement of the trigger member away from the securing element is actually initiated by the securing element itself. That is, the securing element exerts a pushing force onto the trigger member, therefore deflecting the trigger member.

The entrance section of the socket of the clamp's socket section as well as the socket receptacle of the base support may comprise circumferentially arranged indentations and protrusions for adjustment of the rotational position of the clamp with respect to the base support.

It is conceivable that the socket receptacle, the socket, the securing element and the trigger member are separate elements, which may be modularly and arbitrarily combined to each other, as to achieve any possible combination of clamps and base support possible.

Furthermore it is possible that a clamp and/or a support comprise connection means, that is a socket receptacle or a socket, on two sides of the clamp or the base support. With such an embodiment several clamps may be attached to each other in a row.

In a first advantageous embodiment of the inventive clamp assembly, the at least one securing element is blocked from being moved from the pre-lock to the securing position by the at least one locking element prior to completion of engagement of the at least one locking element and the base support.

The engagement of the at least one locking element may occur in particular with the socket receptacle.

In another advantageous embodiment of the inventive clamping assembly, the clamp and/or the base support comprise at least one recess adapted for insertion of an appropriate release member or release tool to move the securing member from its securing position to its pre-lock position.

Such a recess may be adapted to receive a standard screw driver tip but may as well be adapted to receive an especially designed tip of the release member. Especially the latter solution allows securing the clamp assembly against an unauthorized dismounting.

The recess may be adapted such that an inserted release member or release tool may be abutted against an edge of the recess in order to introduce a pivot point for an easy movement of the securing member.

The release tool may firstly be adapted to the securing member from the securing position into the pre-lock position and secondly hold the securing member in the pre-lock position without the need of the end-user to constantly hold the release tool.

In the following the invention will be described in more detail by way of example hereinafter using advantageous embodiments and with reference to the accompanying drawings. The individual features of the described embodiments may be implemented independently of each other or may be omitted if the technical effect of the omitted feature is not relevant. Equal technical features and technical features with similar function or technical effect illustrated in the drawings are provided with equal reference signs. Redundant parts of the description related to equal elements illustrated in different drawings are left out.

The drawings show:
- Fig. 1a-1c: a front view, a side view and a top view of the inventive base support;
- Fig. 2a-2b: two different perspective views of the inventive base support;
- Fig. 3a: a second embodiment of the inventive base support;
- Fig. 3b: a third embodiment of the inventive base support;
- Fig. 4: the inventive clamping assembly prior to mounting the clamp's socket to the socket receptacle of the base support;
- Fig. 5a-5c: the different steps of mounting the clamp's socket to the socket receptacle of the base support;
- Fig. 6a-6c: different views of a further embodiment of an inventive clamping assembly; and
- Fig. 7: the embodiment of Fig. 6a to 6c together with a plurality of cables attached with a cable tie.

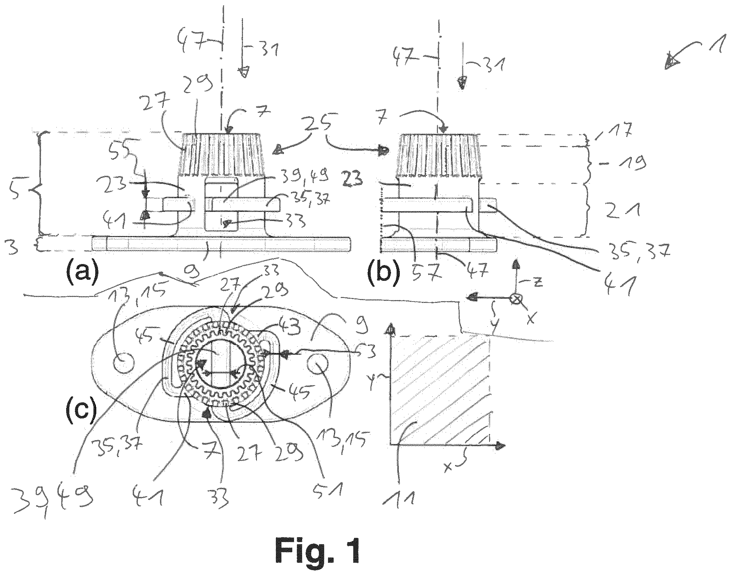

In Figures 1(a)-1(c) a first embodiment of the inventive base support 1 is shown in a front view (a) a side view (c) and a top view (c).

The base support 1 comprises a support section 3 and a socket receiving section 5 comprising a socket receptacle 7. The support section 3 of the embodiment shown in Figure 1 is a support plate 9. The support plate 9 defines a mounting plane 11, which is indicated by the area spanned by an x-axis and a y-axis shown in Figure 1(c) and indicated by a hatching. The socket plate 9 comprises two holes 13 representing two fixation means 15 adapted to fix the base support 1 to a holding structure such as a wall, a machine or similar fundamental structures (not shown).

The fixation means 15 are adapted to receive an appropriate fixation member (not shown), which may be one of a screw, a bolt, a nail, a pin, a rivet or a similar fixation means 15.

The support plate 9 has a shape similar to an ellipse, wherein any other shape of the support plate 9 may be possible, for instance a circular shaped support plate 9.

The number of holes 13 present in this embodiment of the base support 1 is exemplary as well and different embodiments may comprise less or more holes 13.

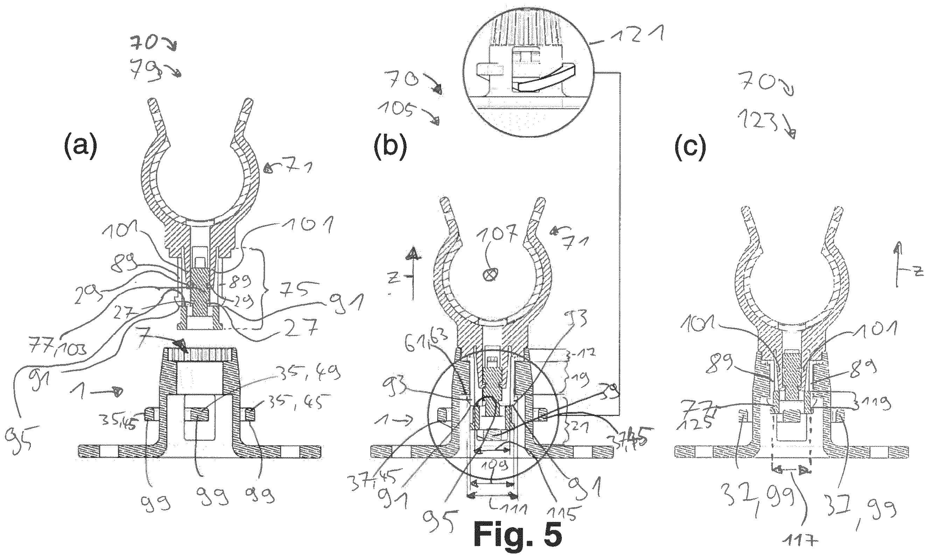

The socket receiving section 5 comprises an entrance section 17, a locking barrel section 19 and a trigger section 21. Said three sections 17, 19, 21 are shown in Figure 1(b) and will be described in more detail in Figure 5.

The socket receptacle 7 is at least partially encircled by a receptacle wall 23 which is cylindrical in the trigger section 21 and cone shaped in the entrance section 17 and the locking barrel section 19.

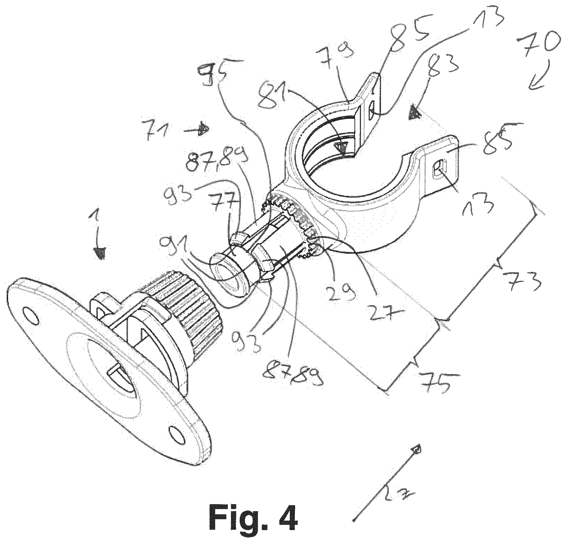

Section 25 comprises circumferentially arranged indentations 27 and protrusions 29, which are arranged around the inside of the receptacle wall 23 at the inside of the socket receptacle 7 in the entrance section 17. The functionality of these protrusions and indentations 29, 27 will be explained with reference to Figure 4.

The receptacle wall 23 of the shown embodiment has two recesses 33, which are located on opposite sides of the cylindrical receptacle wall 23. The recesses 33 extend along the z-direction.

A trigger member 35 comprises a spring member 37, which spring member 37 comprises a beam 39. The trigger member 35 is monolithically connected to the base support 1 at a first end 41 and a second end 43, whereas the labeling first and second are interchangeable.

As shown in Figure 1(c), the trigger member 35 comprises two bent sections 45, which are arranged symmetrically to a central axis 47. The insertion direction 31 is parallel to this central axis 47.

Between the two bent sections 45 of the trigger member 35, a straight section 49 passes through the two recesses 33 in the receptacle wall 23. The two bent sections 45 represent the resilient part of the trigger member 35, whereas the straight section 49 represents the beam 39. The straight section 49 passes the socket receptacle 7, centered, and is oriented substantially perpendicular to the central axis 47.

The width 51 of the straight section 49 is larger than the width 53 of the bent section 45, therefore resulting in a higher flexibility along the z-direction in the bent section 45. In the embodiment shown, the height 55 of the trigger member 35 (see Figure 1(a)) is constant along the whole trigger member 35.

As can be seen from Figures 1(b) and 1(c), the trigger member 55 does not extend above the support plate 9, which is indicated by the dotted line 57. If such a sized support plate 9 is chosen, the base support 1 may be installed in the vicinity of a wall or similar structure, extending substantially parallel to the central axis 47, without a possible blocking of the movement of the trigger member along or opposite to the z-direction.

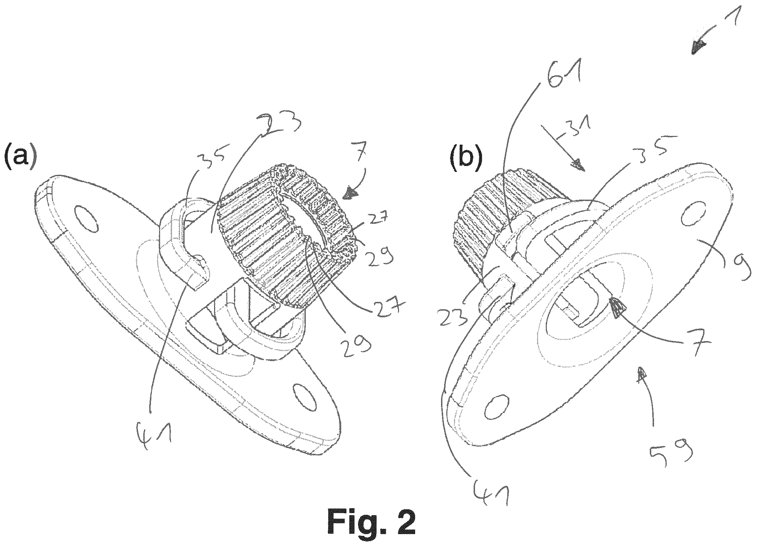

In the Figures 2(a) and (b) the inventive base support 1 is shown in two different perspective views. Especially in Figure 2(a) the indentations 27 and protrusions 29 located inside the socket receptacle 7 can be clearly seen. For reasons of clarity only four indentations and protrusions 27, 29 are labeled in Figure 2(a).

Figure 2(b) shows the bottom 59 of the base support 1, revealing that the socket receptacle 7 is not limited at the support plate 9, but open in the insertion direction 31.

Furthermore, the Figures show that the trigger member 35 is fixed to the receptacle wall 23 solely at the first and second end 41, 43 of the trigger member, wherein only the first end 41 is visible in Figures 2(a) and (b).

In Figure 2(b), a counter locking member 61 is visible. In the embodiment shown, the counter locking member 61 is a circumferential edge 63.

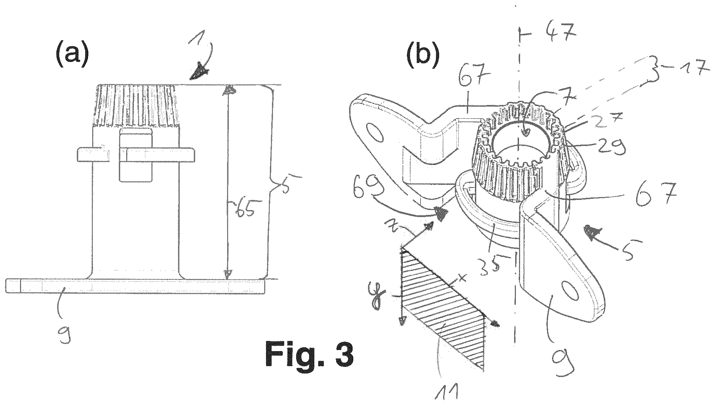

Figure 3(a) shows a second embodiment of the inventive base support 1, wherein the shown embodiment essentially distinguishes from the first embodiment of the base support 1 by the length 65 of the socket receiving section 5.

Such an embodiment is advantageous if a support structure for fixing the support plate 9 is recessed and an elongation of the clamp (not shown) is not possible.

Figure 3(b) shows a third embodiment of the inventive base support 1. In this embodiment, the socket receptacle 7 shows an orientation, in which the central axis 47 of the socket receptacle 7 is oriented substantially parallel to the mounting plane 11, which is, similarly to Figure 1, indicated by the area spanned by the x-axis and the y-axis and provided with a hatching.

Also in this third embodiment, the socket receiving section 5 does not extend over the support plate 9. The indentations 27 and protrusions 29 located at the outer diameter of the entrance section 17 merge into two support arms 67, monolithically connecting the socket receiving section 5 with the support plate 9.

As the socket receiving section 5 and especially the trigger member 35 is freestanding, a free space 69 is located in between two split parts of the support plate 9, which are not directly connected to each other. This space may be connected however, when it is advantageous to provide a surface for gluing the part to a structure.

As described above, the orientation of the socket receptacle 7 may be set to any angle between 0° and 90° to the mounting plane. The angle may be fixed or variable during operation of the base support 1.

Figure 4 shows the clamping assembly 70 comprising the base support 1 and a clamp 71. The clamp comprises a clamping section 73, a socket section 75 and a securing element 77.

The clamping section 73 is embodied as a C-clip 79 with a clamping receptacle 81 and a receptacle opening 83. At the receptacle opening 83, the C-clip 79 comprises two straight latches 85 comprising through holes 13 adapted to receive tightening means (not shown) such as for instance a cable tie or similar tightening means.

In the section of the socket section which lies adjacent to the clamping section, also the clamp 70 comprises indentations 27 and protrusions 29. The indentations and protrusions 27, 29 of the clamp 70 are complementary to those of the base support 1, the latter indentations and protrusions 27, 29 are not shown in Figure 4 (see Figures 1-3).

In the embodiment shown, the receptacle opening 83 opens in a direction that extends basically parallel to the extension of the securing member 77.

In the socket section 75, the clamp 70 furthermore comprises four locking elements 87 which are embodied as locking arms 89. The locking arms 89 are arranged circumferentially around a portion of the securing element 77, whereas the tips 91 of lock beaks 93 are located slightly further into the z-direction as a circumferential abutment edge 95 of the securing element 77. The securing element 77 is mounted to the end of the socket section 75 which end is located opposite to the clamping section 73.

The securing element 77 is actually latched to the clamp 70, which, however, is not visible in Figure 4 (see Figure 5).

Figure 5(a)-(c) shows the different steps of mounting a clamp 71 to a base support 1 to obtain the clamping assembly 70. The figures are shown in a cut along the central axis which is not shown in the figures.

Figure 5(a) shows the clamping assembly 70 in the non-assembled state 97, in which the socket section 75 of the clamp 71 is oriented towards and brought into the vicinity of the socket receptacle 7 of the base support 1.

The trigger member 35 is cut in both bent sections 45 and in the straight section 49, wherein the trigger member 55 is in an unloaded state 99.

In the cut, it is visible, that the securing element 77 extends into a space between the locking arms 89 of the clamp 71 and that the securing element 77 is latched to the clamp 71, preferentially in the socket section 75, by means of two latching arms 101 of the clamp 71 comprising protrusions 29, which latch into indentations 27 of the securing element 77.

The shown embodiment of the securing element 77 comprises four indentations 27, whereas in Figure 5(a), only two indentations 27 are indicated by reference signs for reasons of visibility.

The latching of the latching arms 101 to the indentations 27 of the securing element 77 holds the securing element in the pre-lock position 103. In this pre-lock position 103, the tips 91 of the locking arms 89 are located in the vicinity of the circumferential abutment edge 95 of the securing element 77.

Figure 5(b) shows the clamping assembly 70 in a pre-assembled state 105. In this pre-assembled state 105, the socket section 75 is completely received in the socket receptacle 7 (not shown for reasons of visibility, see Figure 5(a)).

In the entrance section 17 of the base support 1, the indentations and protrusions 27, 29 of the clamp 71 and the base support 1 are engaged in a positive fit similar to a gearing, thus defining and fixing an orientation of a longitudinal structure direction 107, which is pointing into the drawing claim in Figure 5(b) with respect to the base support 1.

Figure 5(b) furthermore shows that the internal diameter 109 of the locking barrel section 19 is smaller than the external diameter 111 of the locking arms 89. Therefore, for reaching the pre-assembled state 105, the abutment of the lock beaks 93 with the inner wall 113 of the locking barrel section 19 deflects the locking arms 89 until the lock beaks 93 engage in a first lock with the counter locking member 61 of the base support 1.

The counter locking member 61 of the base support 1 is embodied as an at least partially circumferential edge 63, which engages with the lock beaks 93. When engagement of said circumferential edge 63 with the lock beaks 93 is completed, the locking arms 89 return to their relaxed position.

Only after completion of the engagement between the circumferential edge 63 with the lock beaks 93, the internal diameter 115 of the locking arms 89 is enlarged due to the locking arms 89 deflecting back in their relaxed position.

The resulting internal diameter 115 of the locking arms 89 corresponds to be external diameter 117 of the blocking section 119 of the securing member 77. The blocking section 119 is only shown in Figure 5(c) for reasons of visibility.

Prior to completion of the engagement between the circumferential edge 63 with the lock beaks 93 the tips 91 of the locking arms 89 abut the abutment edge 95 of the securing element 77 such that a movement of socket section 75 into the socket receptacle 7 results in a movement of the securing element 77 in the same direction.

As long as the engagement between the circumferential edge 63 with the lock beaks 93 is not completed, the securing element is pushed along a direction opposite to the z-direction and as it abuts the beam 39, it pushes said beam 39 downwards, loading the spring member 37.

Loading the spring member 37 corresponds to a bending of the bent sections 45in a direction opposite to the z-direction. To make this bending clear, circle 121 illustrates a non-cut view of the clamping assembly 70 in the pre-assembled state 105, showing that the bent sections 45 are bent and loaded in the direction opposite the z-direction.

After completion of the engagement between the circumferential edge 63 with the lock beaks 93, the loaded spring member 37 pushes the securing element 77 along the z-direction, such that the locking section 119 is inserted in between the locking arms 89.

This assembled state 123 of the clamping assembly 70 is shown in Figure 5(c). In this assembled state 123, the resilient movement of the locking arms 89 is blocked by the securing element 77 as its blocking section 119 is inserted in between the locking arms 89. The spring member 37, which pushes the securing element in the z-direction for inserting the blocking section 119 in between the locking arms 89 returns to its unloaded state 99. The securing element 77 is in a securing position 125.

Furthermore, Fig. 5(a) - (c) show that the latching arms 101 are engaged in a positive lock with indentations 27 of the securing element 77 such that the securing element 77 is held in its pre-lock position 103 (Fig. 5(a) and(b)) and in its securing position 125 (Fig. 5 (c)).

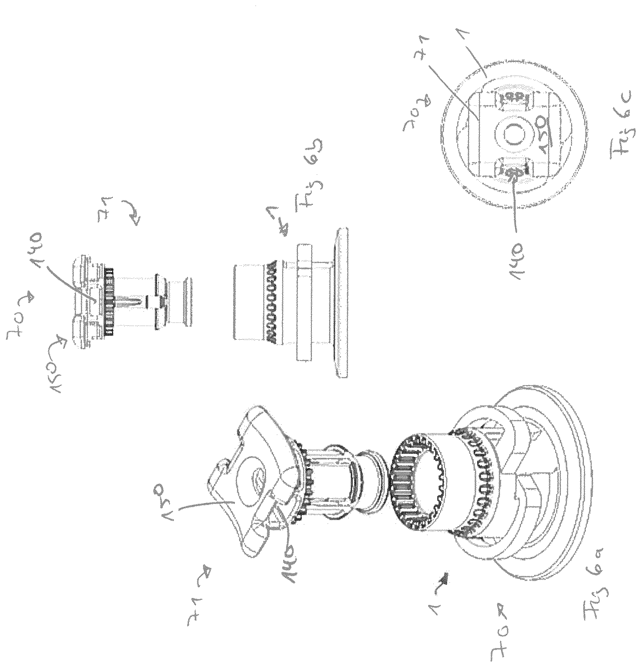

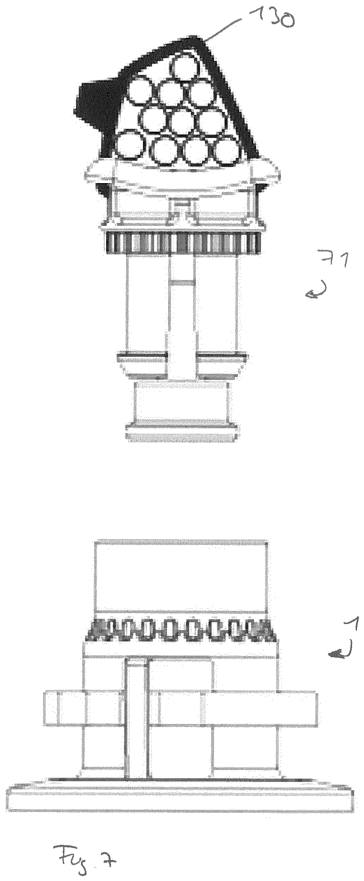

An alternative embodiment shown in Figs. 6a-c and 7 comprises, as a further embodiment of a clamping section 73, a pad, preferably a round-edged pad mounting clip. Beneath the cable facing surface 150, the pad has at least one through-hole 140 adapted to receive tightening means (Fig. 7) such as for instance, a cable tie 130 or similar tightening means.

### REFERENCE NUMERALS

1 base support
3 support section
5 socket receiving section
7 socket receptacle
9 support plate
11 mounting plane
13 hole
15 fixation means
17 entrance section
19 locking barrel section
21 trigger section
23 receptacle wall
25 conical section
27 indentation
29 protrusion
31 insertion direction
33 recess
35 trigger member
37 spring member
39 beam
41 first end
43 second end
45 bent section
47 central axis
49 straight section
51 width of straight section
55 height of the trigger member
57 dotted line
59 bottom of the base support
61 counterlocking member
63 circumferential edge
65 length of socket receiving section
67 support arm
69 free space
70 clamping assembly
71 clamp
73 clamping section
75 socket section
77 securing element
79 C-clip
81 clamping receptacle
83 receptacle opening
85 latch
87 locking element
89 locking arms
91 tip
93 lock beaks
95 abutment edge
97 non-assembled state
99 unloaded state
101 latching arm
103 pre-lock position
105 pre-assembled state
107 longitudinal structure direction
109 internal diameter of the locking barrel section
111 external diameter of the locking arms
113 inner wall of locking barrel section
115 internal diameter of the locking arms
117 external diameter
119 blocking section
121 circle
123 assembled state
125 securing position
130 cable tie
140 through-hole
150 cable facing surface
x-direction
y-direction
z-direction

## Claims

1. Clamp (71) comprising a clamping section (73) which is adapted to clampingly receive at least one longitudinal structure, such as a wire bundle, at least one cable or at least one pipe, further comprising a socket section (75) which is adapted to be mounted to a base support (1),
the clamp (71) further comprising latching arms (101),
the socket section (75) comprising:
at least one securing element (77) which is movable from a pre-lock position (103) to a securing position (125) and comprises indentations (27) and a blocking section (119), and
locking arms (89),
wherein the securing element (77) is mounted to an end of the socket section (75) which end is located opposite to the clamping section (73) in the pre-lock position (103) prior to and during the mounting of the clamp (71) to the base support (1), and wherein the securing element (77) is latched to the socket section (75) both in the pre-lock position (103) and in the securing position (125),
wherein the latching arms (101) are adapted to hold the securing element (77) in the pre-lock position (103) by a latching of the latching arms (101) to the indentations (27) of the securing element (77), and
wherein the securing element (77) is adapted to block a resilient movement of the locking arms (89) by inserting the blocking section (119) of the securing element (77) in between the locking arms (89).

2. Base support (1) comprising a support section (3) for mounting the base support (1) to a holding structure such as a wall, a machine or similar fundamental structures, a socket receptacle (7) for receiving a socket section (75) of a clamp (71), a counter locking element (61), which is embodied as an at least partially circumferential edge (63) for engagement with the socket section (75) of the clamp (71), **characterised in that** the base support (1) is further comprising a trigger member (35), which extends into the socket receptacle (7), wherein the trigger member (35) comprises a beam (39) extending into the receptacle (7) and supported by at least one spring member (37), wherein the beam (39) is arranged as a centered straight section (49) passing the socket receptacle (7) and oriented perpendicular to a central axis (47).

3. Base support (1) according to claim 2, wherein the trigger member (35) comprises the spring member (37), which spring member (37) is adapted to be loaded if the trigger member (35) is moved away from an insertion opening of the socket receptacle (7).

4. Base support (1) according to claim 2 or 3, wherein the socket receptacle (7) is cylindrical and extends substantially along an insertion direction (31) and wherein the trigger member (35) crosses the socket receptacle (7) substantially perpendicular to the insertion direction (31) and wherein the trigger member (35) is fixed at one or both of its ends (41, 43) to the base support (1).

5. Base support (1) according to any one of claims 2 to 4, wherein the trigger member (35) is symmetrical to the insertion direction (31) and/or is substantially S-shaped.

6. Base support (1) according to any one of claims 2 to 5, wherein the trigger member (35) is integrally molded with the base support (1).

7. Base support (1) according to any one of claims 2 to 6, wherein the support section (3) is plate-like and has a mounting plane (11).

8. Base support (1) according to claim 7, wherein the socket receptacle (7) is tilted such that its insertion direction (31) is oriented at an angle of at least substantially 0° or 30° or 45° or 60° or 90° to the mounting plane (11).

9. Clamping assembly (70) comprising
a clamp (71) according to claim 1; and
a base support (1) according to claim 2,wherein the socket receptacle (7) extends substantially along an insertion direction (31), and wherein the socket receptacle (7) is adapted to receive the socket section (75) of the clamp (71) and to engage with the locking arms (89),
wherein, in the securing position (125), the at least one securing element (77) is adapted to secure the engagement of at least one of the locking arms (89) and the socket receptacle (7), and wherein the securing element (77) is latched to the socket section (75) both in the pre-lock position (103) and in the securing position (125); and
wherein the locking arms (89) are adapted to block the at least one securing element (77) from being moved from the pre-lock (103) to the securing position (125) prior to completion of engagement of the locking arms (89) and the base support (1), wherein the securing element (77) is adapted to resiliently deflect the trigger member (35) by exerting a pushing force onto the trigger member (35), and wherein the trigger member (35) is adapted to automatically move the at least one securing element (77) from the pre-lock position (103) to the securing position (125) when the locking arms (89) and the base support (1) are engaged.

10. Clamping assembly (70) according to claim 9, wherein the clamp (71) and/or the base support (1) comprise at least one recess (33) adapted for insertion of an appropriate release member or release tool to move the securing member (77) from its securing position (125) to its pre-lock position (103).

## Patentansprüche

1. Klemme (71) mit einem Klemmabschnitt (73), der geeignet ist, mindestens eine Längsstruktur, wie z.B. ein Drahtbündel, mindestens ein Kabel oder mindestens ein Rohr, klemmend aufzunehmen, ferner einen Sockelabschnitt (75) umfassend, der geeignet ist, an einem Grundträger (1) befestigt zu werden,
wobei die Klemme (71) außerdem Verriegelungsarme (101) aufweist,
der Sockelabschnitt (75) umfassend:
mindestens ein Sicherungselement (77), das aus einer Vorverriegelungsposition (103) in eine Sicherungsposition (125) bewegbar ist und Einbuchtungen (27) und einen Blockierabschnitt (119) aufweist, und
Verriegelungsarme (89),
wobei das Sicherungselement (77) an einem Ende des Sockelabschnitts (75) angebracht ist, dessen Ende gegenüber dem Klemmabschnitt (73) in der Vorverriegelungsposition (103) vor und während der Montage der Klemme (71) am Grundträger (1) angebracht ist, und wobei das Sicherungselement (77) sowohl in der Vorverriegelungsposition (103) als auch in der Sicherungsposition (125) mit dem Sockelabschnitt (75) verrastet ist,
wobei die Verriegelungsarme (101) so angepasst sind, dass sie das Sicherungselement (77) in der Vorverriegelungsposition (103) durch ein Einrasten der Verriegelungsarme (101) an den Vertiefungen (27) des Sicherungselements (77) halten, und
wobei das Sicherungselement (77) geeignet ist, eine elastische Bewegung der Verriegelungsarme (89) zu blockieren, indem der Blockierabschnitt (119) des Sicherungselements (77) zwischen die Verriegelungsarme (89) eingeführt wird.

2. Grundträger (1) umfassend einen Trägerabschnitt (3) zur Befestigung des Grundträgers (1) an einer Haltestruktur wie einer Wand, einer Maschine oder ähnlichen Grundstrukturen, einer Sockelaufnahme (7) zur Aufnahme eines Sockelabschnitts (75) einer Klemme (71), einem Gegensperrelement (61), das als zumindest teilweise umlaufender Rand (63) zum Eingriff mit dem Sockelabschnitt (75) der Klemme (71) ausgebildet ist, **dadurch gekennzeichnet, dass** der Basisträger (1) ferner ein Auslöseelement (35) aufweist, das sich in die Sockelaufnahme (7) erstreckt, wobei das Auslöseelement (35) einen sich in die Sockelaufnahme (7) erstreckenden und von mindestens einem Federelement (37) getragenen Balken (39) aufweist, wobei der Balken (39) als ein zentrierter gerader Abschnitt (49) angeordnet ist, der die Sockelaufnahme (7) durchsetzt und senkrecht zu einer Mittelachse (47) ausgerichtet ist.

3. Basisträger (1) nach Anspruch 2, wobei das Auslöseelement (35) das Federelement (37) umfasst, welches Federelement (37) geeignet ist, belastet zu werden, wenn das Auslöseelement (35) von einer Einführöffnung der Sockelaufnahme (7) weg bewegt wird.

4. Grundträger (1) nach Anspruch 2 oder 3, wobei die Sockelaufnahme (7) zylindrisch ist und sich im Wesentlichen entlang einer Einführrichtung (31) erstreckt und wobei das Auslöseelement (35) die Sockelaufnahme (7) im Wesentlichen senkrecht zur Einführrichtung (31) kreuzt und wobei das Auslöseelement (35) an einem oder beiden seiner Enden (41, 43) am Grundträger (1) befestigt ist.

5. Grundträger (1) nach einem der Ansprüche 2 bis 4, wobei das Auslöseelement (35) symmetrisch zur Einführrichtung (31) und/oder im Wesentlichen S-förmig ausgebildet ist.

6. Grundträger (1) nach einem der Ansprüche 2 bis 5, wobei das Auslöseelement (35) einstückig mit dem Grundträger (1) geformt ist.

7. Grundträger (1) nach einem der Ansprüche 2 bis 6, wobei der Trägerabschnitt (3) plattenartig ist und eine Montageebene (11) aufweist.

8. Grundträger (1) nach Anspruch 7, wobei die Sockelaufnahme (7) so gekippt ist, dass ihre Einführrichtung (31) in einem Winkel von mindestens im Wesentlichen 0° oder 30° oder 45° oder 60° oder 90° zur Montageebene (11) ausgerichtet ist.

9. Klemmanordnung (70) umfassend
eine Klemme (71) nach Anspruch 1; und
einen Basisträger (1) nach Anspruch 2, wobei sich die Sockelaufnahme (7) im Wesentlichen entlang einer Einführrichtung (31) erstreckt und wobei die Sockelaufnahme (7) dazu ausgelegt ist, den Sockelabschnitt (75) der Klemme (71) aufzunehmen und mit den Verriegelungsarmen (89) in Eingriff zu treten,
wobei in der Sicherungsposition (125) das mindestens eine Sicherungselement (77) geeignet ist, den Eingriff von mindestens einem der Verriegelungsarme (89) und der Sockelaufnahme (7) zu sichern, und wobei das Sicherungselement (77) sowohl in der Vorverriegelungsposition (103) als auch in der Sicherungsposition (125) mit dem Sockelabschnitt (75) verriegelt ist; und
wobei die Verriegelungsarme (89) so angepasst sind, dass sie das mindestens eine Sicherungselement (77) daran hindern, von der Vorverriegelungsposition (103) in die Sicherungsposition (125) bewegt zu werden, bevor der Eingriff zwischen den Verriegelungsarmen (89) und dem Basisträger (1) abgeschlossen ist, wobei das Sicherungselement (77) so angepasst ist, dass es das Auslöseelement (35) elastisch auslenkt, indem es eine Druckkraft auf das Auslöseelement (35) ausübt, und wobei das Auslöseelement (35) so angepasst ist, dass es das mindestens eine Sicherungselement (77) automatisch von der Vorverriegelungsposition (103) in die Sicherungsposition (125) bewegt, wenn die Verriegelungsarme (89) und der Basisträger (1) in Eingriff sind.

10. Klemmanordnung (70) nach Anspruch 9, wobei die Klemme (71) und/oder der Basisträger (1) mindestens eine Aussparung (33) aufweisen, die zum Einsetzen eines geeigneten Löseelements oder Lösewerkzeugs geeignet ist, um das Sicherungselement (77) aus seiner Sicherungsposition (125) in seine Vorverriegelungsposition (103) zu bewegen.

## Revendications

1. Collier de serrage (71) comprenant une section de serrage (73) qui est adaptée pour recevoir par serrage au moins une structure longitudinale, telle qu'un faisceau de fils, au moins un câble ou au moins un tuyau, comprenant en outre une section de douille (75) qui est adaptée pour être montée sur un support de base (1),
le collier de serrage (71) comprenant en outre des bras de verrouillage (101),
la section de douille (75) comprenant :
au moins un élément de fixation (77) qui est mobile d'une position avant verrouillage (103) à une position de fixation (125) et comprend des indentations (27) et une section de blocage (119), et
des bras de verrouillage (89),
dans lequel l'élément de fixation (77) est monté sur une extrémité de la section de douille (75), ladite extrémité étant située à l'opposé de la section de serrage (73) dans la position avant verrouillage (103) avant et pendant le montage du collier de serrage (71) sur le support de base (1), et dans lequel l'élément de fixation (77) est verrouillé sur la section de douille (75) à la fois dans la position avant verrouillage (103) et dans la position de fixation (125),
dans lequel les bras de verrouillage (101) sont adaptés pour maintenir l'élément de fixation (77) dans la position avant verrouillage (103) par un verrouillage des bras de verrouillage (101) sur les indentations (27) de l'élément de fixation (77), et
dans lequel l'élément de fixation (77) est adapté pour bloquer un mouvement résilient des bras de verrouillage (89) en insérant la section de blocage (119) de l'élément de fixation (77) entre les bras de verrouillage (89).

2. Support de base (1) comprenant une section de support (3) pour monter le support de base (1) sur une structure de maintien telle qu'un mur, une machine ou des structures fondamentales similaires, un réceptacle de douille (7) pour recevoir une section de douille (75) d'un collier de serrage (71), un élément de contre-verrouillage (61), qui est réalisé sous forme d'un bord au moins partiellement circonférentiel (63) pour s'engager avec la section de douille (75) du collier de serrage (71), **caractérisé en ce que** le support de base (1) comprend en outre un élément de déclenchement (35), qui s'étend dans le réceptacle de douille (7), dans lequel l'élément de déclenchement (35) comprend une poutre (39) qui s'étend dans le réceptacle (7) et supportée par au moins un élément de ressort (37), dans lequel la poutre (39) est agencée comme une section droite centrée (49) passant par le réceptacle de douille (7) et orientée perpendiculairement à un axe central (47) .

3. Support de base (1) selon la revendication 2, dans lequel l'élément de déclenchement (35) comprend l'élément de ressort (37), ledit élément de ressort (37) étant adapté pour être contraint si l'élément de déclenchement (35) est éloigné d'une ouverture d'insertion du réceptacle de douille (7).

4. Support de base (1) selon la revendication 2 ou 3, dans lequel le réceptacle de douille (7) est cylindrique et s'étend substantiellement selon une direction d'insertion (31), dans lequel l'élément de déclenchement (35) traverse le réceptacle de douille (7) de manière substantiellement perpendiculaire à la direction d'insertion (31), et dans lequel l'élément de déclenchement (35) est fixé par l'une ou aux deux de ses extrémités (41, 43) au support de base (1).

5. Support de base (1) selon l'une quelconque des revendications 2 à 4, dans lequel l'élément de déclenchement (35) est symétrique à la direction d'insertion (31) et/ou est substantiellement en forme de S.

6. Support de base (1) selon l'une quelconque des revendications 2 à 5, dans lequel l'élément de déclenchement (35) est moulé intégralement avec le support de base (1).

7. Support de base (1) selon l'une quelconque des revendications 2 à 6, dans lequel la section de support (3) est en forme de plaque et comporte un plan de montage (11).

8. Support de base (1) selon la revendication 7, dans lequel le réceptacle de douille (7) est incliné de telle sorte que sa direction d'insertion (31) est orientée selon un angle d'au moins substantiellement 0°, 30°, 45°, 60° ou 90° par rapport au plan de montage (11).

9. Ensemble de serrage (70) comprenant
un collier de serrage (71) selon la revendication 1 ; et
un support de base (1) selon la revendication 2,dans lequel le réceptacle de douille (7) s'étend substantiellement selon une direction d'insertion (31), et dans lequel le réceptacle de douille (7) est adapté pour recevoir la section de douille (75) du collier de serrage (71) et pour s'engager avec les bras de verrouillage (89),
dans lequel, dans la position de fixation (125), ledit au moins un élément de fixation (77) est adapté pour fixer l'engagement d'au moins l'un des bras de verrouillage (89) et du réceptacle de douille (7), et dans lequel l'élément de fixation (77) est verrouillé sur la section de douille (75) à la fois dans la position avant verrouillage (103) et dans la position de fixation (125) ; et
dans lequel les bras de verrouillage (89) sont adaptés pour bloquer ledit au moins un élément de fixation (77) et l'empêchent d'être déplacé de la position avant verrouillage (103) à la position de fixation (125) avant l'achèvement de l'engagement des bras de verrouillage (89) et du support de base (1), dans lequel l'élément de fixation (77) est adapté pour dévier de manière résiliente l'élément de déclenchement (35) en exerçant une force de poussée sur l'élément de déclenchement (35), et dans lequel l'élément de déclenchement (35) est adapté pour déplacer automatiquement ledit au moins un élément de fixation (77) de la position avant verrouillage (103) à la position de fixation (125) quand les bras de verrouillage (89) et le support de base (1) sont engagés.

10. Ensemble de serrage (70) selon la revendication 9, dans lequel le collier de serrage (71) et/ou le support de base (1) comprennent au moins un renfoncement (33) adapté pour l'insertion d'un élément de libération ou d'un outil de libération approprié pour déplacer l'élément de fixation (77) de sa position de fixation (125) à sa position avant verrouillage (103).
